# EUROPEAN PATENT SPECIFICATION

(11) **EP 3 011 795 B1**
(45) Date of publication and mention of the grant of the patent: **13.12.2017**
(21) Application number: 13732398.6
(22) Date of filing: 17.06.2013
(51) Int. Cl.: H04W 76/02

(54) **METHOD AND SYSTEM FOR SHARING A NETWORK CONNECTION BETWEEN DEVICES**
VERFAHREN UND SYSTEM ZUR GEMEINSAMEN NUTZUNG EINER NETZWERKVERBINDUNG ZWISCHEN VORRICHTUNGEN
PROCÉDÉ ET SYSTÈME DE PARTAGE D'UNE CONNEXION RÉSEAU ENTRE DES DISPOSITIFS

(43) Date of publication of application: 27.04.2016
(73) Proprietor: Dasht BV, 2134 LT Hoofddorp (NL)
(72) Inventor: THOMAS, Tom Oliver, NL-2312 HC Leiden (NL)
(74) Representative: De Vries & Metman
(86) International application number: PCT/EP2013/062500
(87) International publication number: WO 2014/202110

(56) References cited:
- US-A1- 2013 107 783
- US-A1- 2013 128 311

## Description

### FIELD OF THE INVENTION

The present invention relates to sharing network connections between devices. More specifically the intention relates to a system for sharing a network connection between a connectivity provider and a connectivity client, a method in a connectivity provider for sharing a network connection between the connectivity provider and a connectivity client, computer program elements for use in a connectivity provider and computer program elements for use in a connectivity client.

### BACKGROUND

Wireless data connections used by mobile devices are typically cellular data connections and/or WiFi connections.

Cellular data connections are used in cellular networks. A cellular network or mobile network is a radio network distributed over land areas called cells, each served by at least one fixed-location transceiver, known as a cell site or base station. When joined together these cells provide radio coverage over a wide geographic area. This enables a large number of portable transceivers (e.g. mobile phones, smart phones, tablets, notebooks, netbooks, PDAs, etc.) to communicate with each other and with fixed transceivers (e.g. Internet servers, application servers, storage devices, cloud locations, etc.) anywhere in the network, via the base stations. Cellular networks can be based on 2G technologies such as GSM, CDMA, GPRS or EDGE, 3G technologies such as UMTS, or CDMA2000, and more recently 4G technologies such as LTE or LTE Advanced. To make use of a cellular network typically a subscription is required.

WiFi connections may be on a private network or accessed through public hotspots. A device that can use WiFi (such as a personal computer, video-game console, smartphone, digital camera, tablet, digital audio player, etc.) can connect to a network resource such as the Internet via a wireless network access point, also known as a hotspot. Hotspot coverage can comprise an area as small as a single room with walls that block radio waves or as large as many square kilometers - this is achieved by using multiple overlapping access points. Routers that incorporate a digital subscriber line modem or a cable modem and a WiFi access point, often set up in homes and other buildings, provide Internet access and internetworking to devices connected to them, wirelessly or via cable. Similarly, there are battery-powered routers that include a cellular mobile Internet radio modem and WiFi access point. When subscribed to a cellular phone carrier, they allow nearby WiFi stations to access the Internet over 2G, 3G, or 4G networks. E.g. smartphones and tablets are known that have a built-in capability of this sort, including those based on Android, Bada, iOS (iPhone), Windows Phone and Symbian. A subscription may be required to make use of a hotspot.

One or more devices can be connected to the Internet via a single cellular connection using e.g. a process called tethering. Tethering refers to connecting a first device to a second device, wherein the first device is connected to a cellular network and the second device wants to connect to the cellular network via the intermediary of the first device. In the context of smart phones and tablets, tethering allows sharing of for example an UMTS Internet connection of a smart phone with other smart phones and tablets. A local communication network connection between the first device and the second device is typically made using WiFi, WiFi Direct, Bluetooth, NFC or by a physical connection using a cable for example, through USB. Tethering over WiFi is also known as mobile hotspot. The Internet-connected first device can thus act as a portable wireless access point and router for other devices connected to it.

The following use-cases are known in the context of tethering. Firstly, cellular access to the Internet (or any other particular network) can be provided to a non-cellular device via the intermediary of a cellular device having access to the Internet. Secondly, access to the Internet (or any other particular network) can be provided to a device without a required subscription via the intermediary of a device having a subscription to access the Internet (e.g. through a subscription of a mobile operator). Thirdly, in case of roaming (i.e. being in a visited network instead of a home network, e.g. when abroad) access to the Internet (or any other particular network) can be provided to a roaming device via the intermediary of a device having a subscription in the visited network to avoid expensive data roaming costs.

A problem with connection sharing solutions such as tethering is that the first device (i.e. the connectivity provider) has no or limited control over the second device (i.e. the connectivity client) with respect to access/use of its router function in case the second device has the credentials for setting up a device-to-device network connection. For example, if the SSID and WPA2/AES keys are known, then the second device may setup the device-to-device connection at any time when the access point of the first device is active.

There is need for a solution wherein a second device (or more devices) can access a network via a first device, such as with tethering, wherein the first device is in control of the connection with the second device and wherein the first device and/or the second device can be a mobile device. Hereinafter the first device is called the "connectivity provider" and the second device is called the "connectivity client".

### SUMMARY OF THE INVENTION

According to an aspect of the invention a system is proposed for sharing a network connection between a connectivity provider and a first connectivity client. The connectivity provider can comprise a router for accessing a network. The first connectivity client can be configured to connect to the network via a first device-to-device connection between the first connectivity client and the connectivity provider and via the router in the connectivity provider. The first connectivity client can comprise a first access point. The connectivity provider can be configured to send a connection request to the first access point to thereby establish the first device-to-device connection.

According to another aspect of the invention a connectivity provider is proposed for sharing a network connection with a first connectivity client. The connectivity provider can comprise a router for accessing a network and for enabling the first connectivity client to connect to the network via a device-to-device connection between the first connectivity client and the connectivity provider and via the router. The connectivity provider can be configured to send a connection request to a first access point in the connectivity client to thereby establish the device-to-device connection.

According to another aspect of the invention a connectivity client is proposed for accessing a network connection that is shared by a connectivity provider. The connectivity client can be configured to connect to a network via a first device-to-device connection between the first connectivity client and the connectivity provider and via a router in the connectivity provider. The first connectivity client can comprise a first access point to enable the connectivity provider to send a connection request to the first access point to thereby establish the first device-to-device connection.

According to another aspect of the invention a method in a connectivity provider is proposed for sharing a network connection between the connectivity provider and a first connectivity client. The connectivity provider can comprise a router for accessing a network. The first connectivity client is configured to connect to the network via a first device-to-device connection between the first connectivity client and the connectivity provider and via the router in the connectivity provider. The method can comprise sending a connection request from the connectivity provider to a first access point in the connectivity client to thereby establish the first device-to-device connection.

According to another aspect of the invention a computer program element is proposed, which, when being executed by processor, is adapted to carry out the method for use in a connectivity provider as described above.

According to another aspect of the invention a method in a connectivity client is proposed for accessing a network connection that is shared by a connectivity provider. The connectivity client can be configured to connect to a network via a first device-to-device connection between the first connectivity client and the connectivity provider and via a router in the connectivity provider. The method can comprise activating an access point in the connectivity client to enable the connectivity provider to send a connection request to the first access point to thereby establish the first device-to-device connection.

According to another aspect of the invention a computer program element is proposed, which, when being executed by processor, is adapted to carry out the method for use in a connectivity client as described above.

The invention solves the problem of the connectivity provider's control deficit identified in the prior art by using the access point (AP) of the connectivity client while maintaining the router functionality in the connectivity provider. As a result, it is up to the connectivity provider to decide whether to send connection requests to the AP in the connectivity client after which the connectivity client may access the router in the connectivity provider. By contrast, in known tethering solutions the AP and router are located in the connectivity provider and it is up to the connectivity client to decide whether to send connection requests to the AP in the connectivity provider. Thus the connectivity provider has more control over connectivity consumption by connectivity clients and can limit access to its router functionality and internet traffic.

Besides the advantage of giving connectivity control to the connectivity provider, the invention advantageously prolongs the battery life of the connectivity provider in the context of device-to-device internet sharing between electronic devices, because establishing and maintaining an AP is energy-expensive and this function has been off-loaded to the connectivity client device. Furthermore CPU/memory/system resource burdens may be placed on the connectivity client as opposed to the connectivity provider.

With the AP being located in the connectivity client instead of the connectivity provider, the discoverability of the connectivity provider is more difficult. This advantageously provides the connectivity provider with additional security, i.e. the connectivity provider may be less prone to access attacks to the AP for gaining access to the router.

The embodiments of claims 2-4 advantageously enable multiple connectivity clients to be connected to the router of the connectivity provider in various ways.

The embodiments of claims 5 and 10 advantageously enable credential for setting up the device-to-device connection to be exchanged between the connectivity provider and the connectivity client.

The embodiment of claim 6 advantageously enables credential for setting up the device-to-device connection to be exchanged between the connectivity provider and the connectivity client without an active connection between the connectivity provider and the connectivity client.

The embodiment of claim 7 advantageously enables the use of commonly available technology in setting up the device-to-device connection.

The embodiment of claim 8 advantageously enables outside control, i.e. via the back-end server, over the network sharing between the connectivity provider and the connectivity client.

The embodiment of claim 13 advantageously provides for a mechanism of setting up the device-to-device connection on the initiative of the connectivity provider.

Hereinafter, embodiments of the invention will be described in further detail. It should be appreciated, however, that these embodiments may not be construed as limiting the scope of protection for the present invention.

### BRIEF DESCRIPTION OF THE DRAWINGS

Aspects of the invention will be explained in greater detail by reference to exemplary embodiments shown in the drawings, in which:
Figs.1-7 are architectural views of systems of exemplary embodiments of the invention; and
Fig.8 is a flow chart of a process of an exemplary embodiment of the invention.

### DETAILED DESCRIPTION OF THE DRAWINGS

In the following examples the invention is explained with reference to a mobile internet sharing method. It is to be understood that the invention is not limited hereto and may be used to share any network connection with a connectivity client via a router in a connectivity provider.

The status of the device as either connectivity client or connectivity provider may be determined by a number of criteria, such as, but not limited to, whether a device is operating in 'roaming' mode; the cost of its data consumption; and/or its geographic location in relation to information stored about the device in a database. This determination may be performed automatically and may be made according to algorithms contained in software present on the devices, and which may have been downloaded in the form of, but not restricted to, a mobile or tablet software application (also known as app). Once a device has been determined to be a connectivity client, it may (possibly automatically) establish an AP.

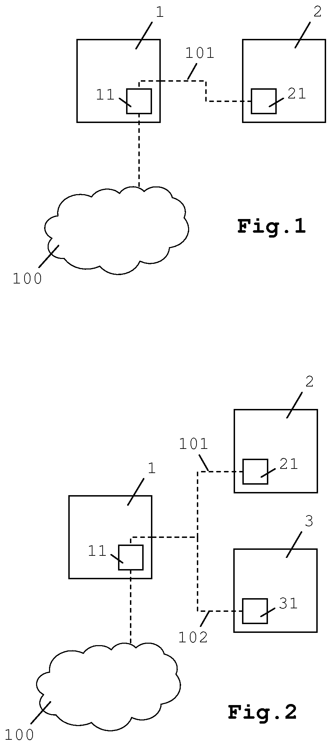

With reference to Fig.1, the connectivity provider 1 may scan for an AP 21 established on the connectivity client 2. An in-range connectivity provider 1 may request to be connected to the AP 2 of the connectivity client by a local communication network 101 (e.g. WiFi, WiFi Direct, Bluetooth or NFC). It may be required that both devices 1,2 have a software application installed for authorization and/or authentication purposes. If the connection is approved by the connectivity client 2, the two devices 1,2 successfully establish a device-to-device connection 101. The router 11 on the connectivity provider 1 may now be used by the connectivity client 2 in order to route e.g. internet traffic across the established local network 101 (i.e. device-to-device connection) to an external network 100 such as the Internet.

Multiple connectivity clients 2 may be enabled to use the router 11 on the connectivity provider 1, as shown in Figs.2-4

Similar to the example of Fig.1, in Fig.2 a second connectivity client 3 may establish an AP 31 to which the connectivity provider 1 connects to enable the second connectivity client 3 to use the router 11 of the connectivity provider 1 via the device-to-device connection 102. To be able to connect to multiple APs, the connectivity provider 1 may use different access technologies for connecting to the different APs, e.g. WiFi and BlueTooth, may use different transceivers for connecting to the different APs when using the same access technology, or use a single transceiver that is capable of setting up connections to different APs. In this way the connectivity provider 1 may connect to multiple (i.e. two or more) connectivity clients 2,3.

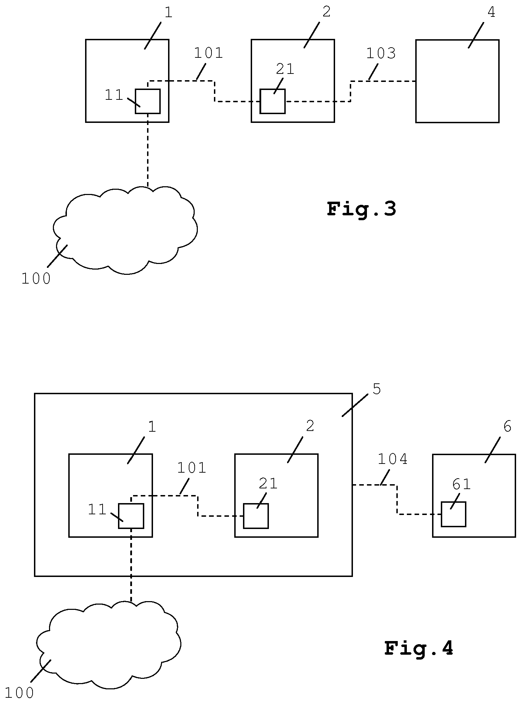

Additionally or alternatively, as shown in Fig.3, the above-described network sharing method may permit a third connectivity client 4 (or even more connectivity clients) to connect to the AP 21 of an already connected connectivity client 21 (hereinafter "first connectivity client") and consume internet connectivity via the connectivity provider 1, provided the first connectivity client 2 has access to the internet via the connectivity provider 1. In this scenario, the third connectivity client 4 uses its device-to-device connection 103 with the first connectivity client 2 and the device-to-device connection 101 between the first connectivity client 2 and the connectivity provider 1 to access and make use of the router functionality 11 of the connectivity provider 1. This multi-hop scenario may be seen as a range extender for accessing the router 11 in the connectivity provider 1, i.e. where for example WiFi permits a range up to 60m, the multihop scenario in the example above permits a theoretical maximum of twice this range.

The third connectivity client 4 as shown in Fig.3 may have an AP to which other connectivity clients connect, similar to the connection of the third connectivity client 4 to the first connectivity client 2. In this way a 'chain' of connectivity clients may be achieved.

Additionally or alternatively, as shown in Fig.4, the connectivity provider 1 and the first connectivity client 2 together form a "virtual connectivity provider" 5. The virtual connectivity provider 5 may scan for an AP 61 established on a fourth connectivity client 6. An in-range virtual connectivity provider 5 may request to be connected to the AP 61 of the fourth connectivity client 6 by a local communication network 104 (e.g. WiFi, WiFi Direct, Bluetooth or NFC). It may be required that both the virtual connectivity provider 5 and the fourth connectivity client 6 have a software application installed for authorization and/or authentication purposes. If the connection is approved by the connectivity client 6, the device-to-device connection 104 may be established. The router 11 on the connectivity provider 1 may now be used by the fourth connectivity client 6 in order to route e.g. internet traffic across the established local network 104,101.

The connection 104 between the virtual router 5 and the fourth connectivity client 6 will actually be requested by the connectivity provider 1 or the first connectivity client 2 acting to the fourth connectivity client 6 as virtual connectivity provider 5. In case the connection is requested by the connectivity provider 1, then the fourth connectivity client 6 as shown in Fig.4 acts like the second connectivity client 3 as shown and explained in Fig.2. In case the connection is requested by the first connectivity client 2, then the first connectivity client 2 as shown in Fig.4 makes a connection to the AP of the fourth connectivity client 6. Next, the fourth connectivity client 6 may access the router 11 via the first connectivity client 2.

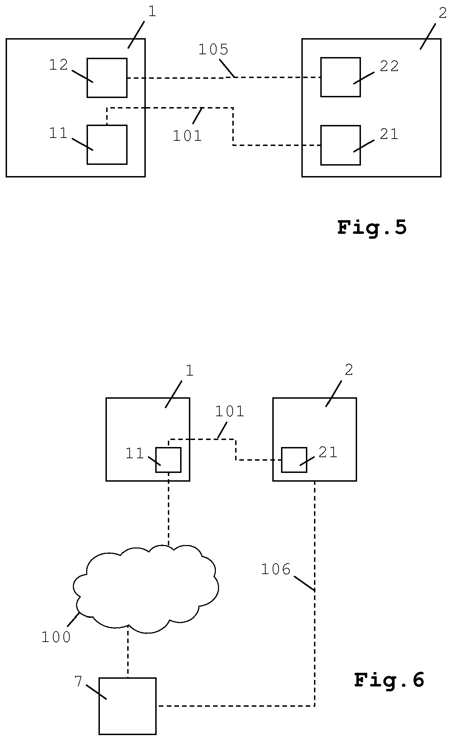

In the prior art, where a device establishes an AP, typically it is for the device accessing the AP to fill in any necessary configuration details (e.g. SSID settings and passwords or pass codes, etcetera). In an embodiment of the invention this burden can be placed on the connectivity client. An non-limiting example using WiFi Direct and out-of-band exchange of credentials is presented below with reference to Fig.5.

The connectivity provider 1 and the connectivity client 2 are for example Android based devices such as Android smartphones and/or Android tablets utilizing WiFi to set up the device-to-device connection 101. In the context of devices utilizing Android OS versions below 4.0, SSID credentials for connecting to a WiFi AP 21 may be fixed such that so long as credentials are publicized (e.g. by means of an app on the device), devices will create local networks automatically. More recent versions of Android (4.0 and above) may utilize WiFi Direct wherein SSID / pass codes pairs may be generated dynamically and which requires these credentials to be privately shared.

To allow the connectivity provider 1 to connect manually to the AP 21 of the connectivity client 2 using WiFi Direct, the WiFi Direct pass code may be shared by displaying the code on the display of one device, which code must be entered on the other device.

To enable the connectivity provider 1 to automatically make a WiFi Direct connection 101 to the connectivity client 2, the WiFi Direct pass code may be shared out-of-band, e.g. by using Bluetooth, NFC or any other out-of-band protocol, to exchange the WiFi Direct credentials between the devices via a Bluetooth connection 105. When the connectivity provider 1 decides it wants to connect to the AP 21 of the connectivity client 2, it may activate its Bluetooth transceiver 12 to exchange the WiFi Direct credentials with the connectivity client 2 via the connectivity client's Bluetooth transceiver 22. The connectivity provider 1 searches for a connectivity client 2 using e.g. the Bluetooth protocol. If a connectivity client 2 is located, the connectivity provider 1 and connectivity client 2 may but are not required to formally pair (i.e. Bluetooth pair) in order to exchange the WiFi Direct credentials. Pairing is not required when the credentials are e.g. encoded in a string exchanged between the connectivity provider 1 and connectivity client 2 in the process of handshaking and before pairing is established. Once the string has been received, a device-to-device connectivity app on the connectivity provider 1 may decode the encoded string to obtain the WiFi Direct credentials and uses the credentials to establish the WiFi Direct device-to-device connection 101 via the AP 21.

The devices 1,2,3,4,6 may store a cache of (possibly continuously updated) access credentials, such as obtained WiFi Direct credentials, for connecting to the AP 21 of the connectivity client 2, which may be shared with other devices in range. The cache may be synchronized with a remote cache location stored in a back-end server shown in Fig.6.

Multiple connectivity providers may connect to one connectivity client. This enables the connectivity client or a user of the connectivity client to toggle between routers (i.e. of the connectivity providers) based on the quality of service of the router. Herein, the quality of service may be expressed and used in various ways, e.g. as an available bandwidth, latency, or costs for using the router function.

A back-end server 7, such as shown in the example of Fig.6, may be used for gathering, storing and processing information about app instances and devices. The back-end server 7 may alternatively or additionally be used for providing the credentials for setting up a connection between the connectivity provider 1 and the connectivity client(s). The out-of-band method shown in Fig.5 may be used as a fall-back mechanism in case the back-end server 7 is unreachable or if the required credentials are not available in the back-end server 7. The credentials stored in the back-end server 7 may include credentials for setting up a connection to the AP of the connectivity client. The credentials stored in the back-end server may include credentials for setting up higher protocol layer connections between the connectivity client and the connectivity provider, such as e.g. a VPN connection on top of the network connection to the AP.

The connectivity app installed on the connectivity provider 1 and connectivity client 2 may communicate with the back-end server 7, which is typically located on the Internet. The connection between the connectivity client 2 and the back-end server 7 may be established via the router 11 of the connectivity provider 1 or via a direct connection 106. The back-end server 7 may collect information about geo-location and crash reports and may perform analytics. The back-end server 7 may perform authorization and communication tasks involved in setting up a VPN layer on top of the device-to-device connection(s) 101,103,104. This ensures that communication between the connectivity client(s) 2,3,4,6 and the connectivity provider 1 is encrypted and more difficult to intercept. Any known VPN technology may be used to establish the additional VPN layer.

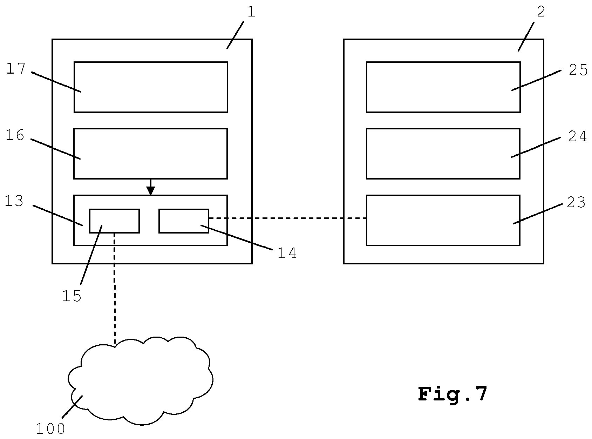

Fig.7, which is similar to Fig.1, as an example shows a connectivity provider 1 and a connectivity client 2 in more detail. The device acting as connectivity provider 1 comprises a communication module 13, a control unit 15, and a power unit (battery) 16. The communication module 13 is in turn made up of a local communication module 14 (making use of e.g. WiFi, Bluetooth or WiFi Direct, or other wireless technology) and a mobile communication module 15 (making use of e.g. 2G, 3G or 4G to connect to a mobile network). The device acting as connectivity client 2 comprises a local communication module 23, a control unit 24 and a power unit 25.

When the connectivity client 2 establishes a connection to the internet 100 by means of the connectivity provider 1, it establishes a device-to-device connection 101 by way of the local communication modules 14 and 23 using a network sharing method implemented by the control units 16 and 24. The local communication unit 23 may be the access point 21 as shown in Fig.1. The mobile communication unit 15 may comprise the router 11 as shown in Fig.1.

By having the AP in the connectivity client 2, the power unit 17 is used less as the AP power usage is shifted to the power unit 25.

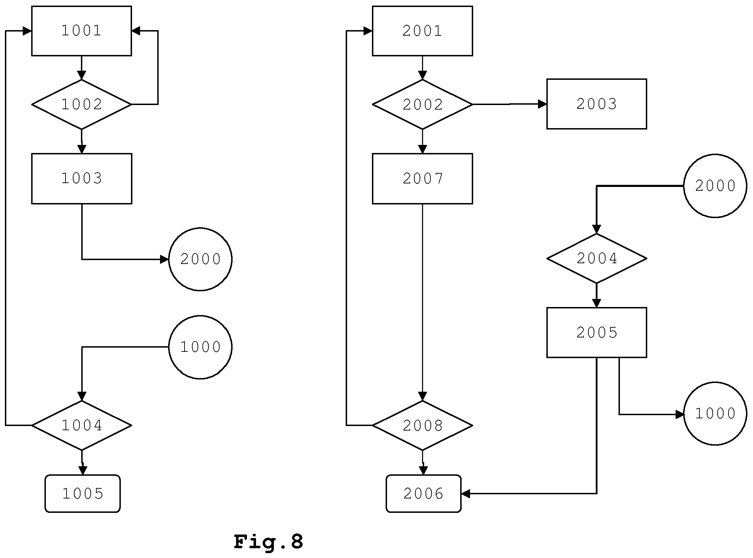

A non-limiting example of a network sharing process is shown in Fig.8.

Before the network sharing method as described in Fig.8 initializes, the following preliminary steps may be performed. The devices 1,2 power-on. The devices 1,2 determine their connectivity status, i.e. whether they will be connectivity provider 1 or connectivity client 2, based on criteria relating to e.g. whether the device is operating in 'roaming' mode, mobile data is switched on or off, data usage costs and/or geographic location data. Devices 1 with connectivity provider status may have their ability to establish an AP disabled in relation to connectivity clients 2. Devices 2 with connectivity client status may (possibly automatically) establish APs 21 themselves or connect to APs established by other connectivity clients.

The connectivity provider 1 may start searching 1001 for in-range APs 21 established by a connectivity client 2.

A connectivity client 4 (e.g. the third communication client 4 in the example of Fig.3) may starts searching 2001 for another connectivity client 2 which is already connected to a connectivity provider 1 and which has a connection to the internet 100 via the connectivity provider 1. If the connectivity client 4 finds an AP 21 of such a device 2, which determination step is shown in step 2002, it may requests 2007 to connect to the AP 21 of the first connectivity client 2, as shown in Fig.3. Such request may be acknowledged 2008.

If no first connectivity client 2 is found by the third communication client 4 then a connection may be established as shown in Fig.1. It is to be understood that it is possible to skip the steps of becoming a third connectivity client 4 and that the process goes from step 2001 to step 2003 directly. The connectivity client 2 may establish/start 2003 an AP 21. If there are any connectivity providers 1 in range, which determination step is shown in step 1002, such connectivity providers 1 may send a connection request 1003 and the connectivity client 2 judges 2004 whether the connectivity provider 1 has sent a connection request. Hereto, circles 2000 indicate for the handling of the connectivity request a flow from the left flow chart related to the connectivity provider to the right flow chart related to the connectivity client. If the outcome of 2004 is positive, the connectivity client 2 may acknowledge 2005 such request, which acknowledgement may be received by the connectivity provider 1, where the acknowledgement may be verified 1004. Hereto, circles 2000 indicate for the acknowledgement a flow from the right flow chart related to the connectivity client to the left flow chart related to the connectivity provider. If the connection is not acknowledged, then the process at the connection provider 1 may start all over. In steps 1005 and 2006 the device-to-device connection is established, after which the connectivity client may start using the router 11 of the connectivity provider 1. Internet traffic may then e.g. be routed over the local network 101.

Steps 2001 and 2003 and their subsequent steps may be switched such that the connectivity client's first step after power-on is to start an AP 21 rather than search for other connectivity clients. Circumstances determining this switch may depend on a number of factors, such as the geographic location of the device or the known number of available connectivity providers, or it may be predetermined.

One embodiment of the invention may be implemented as a program product for use with a computer system. The program(s) of the program product define functions of the embodiments (including the methods described herein) and can be contained on a variety of non-transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state nonvolatile semiconductor memory) on which information is permanently stored; and (ii) writable storage media (e.g., flash memory, floppy disks within a diskette drive or hard-disk drive or any type of solid-state random-access semiconductor memory) on which alterable information is stored.

## Claims

1. A system for sharing a network connection between a connectivity provider (1) and a first connectivity client (2), wherein the connectivity provider (1) comprises a router (11) for accessing a network (100) and wherein the first connectivity client (2) is configured to connect to the network (100) via a first device-to-device connection (101) between the first connectivity client (2) and the connectivity provider (1) and via the router (11) in the connectivity provider (1), **characterized in that** the first connectivity client (2) comprises a first access point (21) and the connectivity provider (1) is configured to send a connection request to the first access point (21) to thereby establish the first device-to-device connection (101).

2. The system according to claim 1, further comprising a second connectivity client (3) and wherein the second connectivity client (3) is configured to connect to the network (100) via a second device-to-device connection (102) between the second connectivity client (3) and the connectivity provider (1) and via the router (11) in the connectivity provider (1), **further characterized in that** the second connectivity client (3) comprises a second access point (31) and the connectivity provider (1) is configured to make a connection to the second access point (31) to thereby establish the second device-to-device connection (102).

3. The system according any on of the preceding claims, further comprising a third connectivity client (4) and wherein the third connectivity client (4) is configured to connect to the network (100) via a third device-to-device connection (103) between the second connectivity client (3) and the third connectivity client (4), via the first device-to-device connection (101) and via the router (11) in the connectivity provider (1), **further characterized in that** the third connectivity client (4) is configured to make a connection to the first access point (21) to thereby establish the third device-to-device connection (103).

4. The system according to any one of the preceding claims, further comprising a fourth connectivity client (6) and wherein the fourth connectivity client (6) is configured to connect to the network (100) via a fourth device-to-device connection (104) and via the router (11) in the connectivity provider (1), **further characterized in that** the connectivity provider (1) and the first connectivity client (2) are configured to form a virtual connectivity provider (5) when the first device-to-device-connection (101) is established, the fourth connectivity client (6) comprises a third access point (61) and the virtual connectivity provider (5) is configured to make a connection to the third access point (61) to thereby establish the fourth device-to-device connection (104).

5. The system according to any one of the preceding claims, wherein the connectivity provider (1) further comprises a first out-of-band transceiver (12) and the connectivity client (2,3,4,6) comprises a second out-of-band transceiver (22), **further characterized in that** the connectivity provider (1) and the connectivity client (2,3,4,6) are configured to exchange credentials data for setting up the device-to-device connection (101,102,103,104) using the out-of-band transceivers (12,22).

6. The system according to claim 5, **further characterized in that** the connectivity provider (1) and the connectivity client (2,3,4,6) are configured to exchange the credentials data during handshaking.

7. The system according to claim 6, **further characterized in that** the device-to-device connection (101,102,103,104) is a WiFi Direct connection and wherein the out-of-band transceivers (12,22) are Bluetooth transceivers.

8. The system according to any one of the preceding claims, further comprising a back-end server (7) that is communicatively connected to the network (100) and **further characterized in that** the back-end server (7) is configured to transmit configuration data to the connectivity provider (1) and the connectivity client (2,3,4,6) for setting up the device-to-device connection or a VPN connection on top of the device-to-device connection (101,102,103,104).

9. A connectivity provider (1) for sharing a network connection with a first connectivity client (2), wherein the connectivity provider (1) comprises a router (11) for accessing a network (100) and for enabling the first connectivity client (2) to connect to the network (100) via a device-to-device connection (101) between the first connectivity client (2) and the connectivity provider (1) and via the router (11), **characterized in that** the connectivity provider (1) is configured to send a connection request to a first access point (21) in the connectivity client (2) to thereby establish the device-to-device connection (101).

10. The connectivity provider according to claim 9, wherein the connectivity provider (1) further comprises a first out-of-band transceiver (12) that is communicatively connectable to a second out-of-band transceiver (22) in the connectivity client (22,3,4,6), **further characterized in that** the connectivity provider (1) is configured to exchange credentials data for setting up the device-to-device connection (101,102,103,104) using the out-of-band transceiver (12).

11. A connectivity client (2) for accessing a network connection that is shared by a connectivity provider (1), wherein the connectivity client (2) is configured to connect to a network (100) via a first device-to-device connection (101) between the first connectivity client (2) and the connectivity provider (1) and via a router (11) in the connectivity provider (1), **characterized in that** the first connectivity client (2) comprises a first access point (21) to enable the connectivity provider (1) to make a connection to the first access point (21) to thereby establish the first device-to-device connection (101).

12. A method in a connectivity provider (1) for sharing a network connection between the connectivity provider (1) and a first connectivity client (2), wherein the connectivity provider (1) comprises a router (11) for accessing a network (100) and wherein the first connectivity client (2) is configured to connect to the network (100) via a first device-to-device connection (101) between the first connectivity client (2) and the connectivity provider (1) and via the router (11) in the connectivity provider (1), **characterized in that** the method comprises:
sending a connection request (1001,1002,1003,1005) from the connectivity provider (1) to a first access point (21) in the connectivity client (2) to thereby establish the first device-to-device connection (101).

13. The method according to claim 12, wherein the making of the connection comprises:
searching (1001,1002) for the first access point (21) by the connectivity provider (1);
transmitting (1003) a request from the connectivity provider (1) to the connectivity client (2) for setting up a connection to the access point (21);
setting up (1005) the device-to-device connection (101) via the access point (21).

14. A method in a connectivity client (2) for accessing a network connection that is shared by a connectivity provider (1), wherein the connectivity client (2) is configured to connect to a network (100) via a first device-to-device connection (101) between the first connectivity client (2) and the connectivity provider (1) and via a router (11) in the connectivity provider (1), **characterized in that** the method comprises:
activating (2003) an access point (21) in the connectivity client (2) to enable the connectivity provider (1) to send a connection request to the first access point (21) to thereby establish the first device-to-device connection (101).

15. A computer program element, which, when being executed by a processor, is adapted to carry out a method for use in a connectivity provider (1) according to claim 12 or claim 13.

16. A computer program element, which, when being executed by a processor, is adapted to carry out a method for use in a connectivity client (2) according to claim 14.

## Patentansprüche

1. System zum Teilen einer Netzwerkverbindung zwischen einem Konnektivitäts-Provider (1) und einem ersten Konnektivitäts-Client (2), wobei der Konnektivitäts-Provider (1) einen Router (11) für den Zugang zu einem Netzwerk (100) aufweist, und wobei der erste Konnektivitäts-Client (2) ausgelegt ist, sich mit dem Netzwerk (100) über eine erste Vorrichtung-zu-Vorrichtung-Verbindung (101) zwischen dem ersten Konnektivitäts-Client (2) und dem Konnektivitäts-Provider (1) zu verbinden und über den Router (11) in den Konnektivitäts-Provider (1),
**dadurch gekennzeichnet, dass** der erste Konnektivitäts-Client (2) einen ersten Zugangspunkt (21) aufweist, und der Konnektivitäts-Provider (1) ausgelegt ist, um eine Verbindungsanforderung an den ersten Zugangspunkt (21) zu senden, um damit die erste Vorrichtung-zu-Vorrichtung-Verbindung (101) aufzubauen.

2. System nach Anspruch 1, ferner mit einem Konnektivitäts-Client (3), und wobei der zweite Konnektivitäts-Client (3) ausgelegt ist, sich mit dem Netzwerk (100) über eine zweite Vorrichtung-zu-Vorrichtung-Verbindung (102) zwischen dem zweiten Konnektivitäts-Client (3) und dem Konnektivitäts-Provider (1) und über den Router (11) in den Konnektivitäts-Provider (1) zu verbinden,
ferner **dadurch gekennzeichnet, dass** der zweite Konnektivitäts-Client (3) einen zweiten Zugangspunkt (31) aufweist und der Konnektivitäts-Provider (1) ausgelegt ist, eine Verbindung mit dem zweiten Zugangspunkt (31) herzustellen, um damit die zweite Vorrichtung-zu-Vorrichtung-Verbindung (102) aufzubauen.

3. System nach einem der vorhergehenden Ansprüche, ferner mit einem dritten Konnektivitäts-Client (4), und wobei der dritte Konnektivitäts-Client (4) ausgelegt ist, sich mit dem Netzwerk (100) über eine dritte Vorrichtung-zu-Vorrichtung-Verbindung (103) zwischen dem zweiten Konnektivitäts-Client (3) und dem dritten Konnektivitäts-Client (4) über die erste Vorrichtung-zu-Vorrichtung-Verbindung (101) und über den Router (11) in den Konnektivitäts-Provider (1) zu verbinden, ferner **dadurch gekennzeichnet, dass** der dritte Konnektivitäts-Client (4) ausgelegt ist, eine Verbindung mit dem ersten Zugangspunkt (21) herzustellen, um damit die dritte Vorrichtung-zu-Vorrichtung-Verbindung (103) aufzubauen.

4. System nach einem der vorhergehenden Ansprüche, ferner mit einem vierten Konnektivitäts-Client (6), und wobei der vierte Konnektivitäts-Client (6) ausgelegt ist, sich mit dem Netzwerk (100) über eine vierte Vorrichtung-zu-Vorrichtung-Verbindung (104) und über den Router (11) in den Konnektivitäts-Provider (1) zu verbinden, ferner **dadurch gekennzeichnet, dass** der Konnektivitäts-Provider (1) und der erste Konnektivitäts-Client (2) ausgelegt sind, um einen virtuellen Konnektivitäts-Provider (5) zu bilden, wenn die erste Vorrichtung-zu-Vorrichtung-Verbindung (101) aufgebaut ist, der vierte Konnektivitäts-Client (6) einen dritten Zugangspunkt (61) aufweist, und der virtuelle Konnektivitäts-Provider (5) ausgelegt ist, um eine Verbindung zu dem dritten Zugangspunkt (61) herzustellen, um damit die vierte Vorrichtung-zu-Vorrichtung-Verbindung (104) aufzubauen.

5. System nach einem der vorhergehenden Ansprüche, wobei der Konnektivitäts-Provider (1) ferner einen ersten Out-of-Band-Sender/Empfänger (12) aufweist, und der Konnektivitäts-Client (2, 3, 4, 6) einen zweiten Out-of-Band-Sender/Empfänger (22) aufweist, ferner **dadurch gekennzeichnet, dass** der Konnektivitäts-Provider (1) und der Konnektivitäts-Client (2, 3, 4, 6) ausgelegt sind, um Berechtigungsdaten auszutauschen, um eine Vorrichtung-zu-Vorrichtung-Verbindung (101, 102, 103, 104) unter Einsatz der Out-of-band-Sender/Empfänger (12, 22) einzurichten.

6. System nach Anspruch 5, ferner **dadurch gekennzeichnet, dass** der Konnektivitäts-Provider (1) und der Konnektivitäts-Client (2, 3, 4, 6) ausgelegt sind, die Berechtigungsdaten während der Quittierung auszutauschen.

7. System nach Anspruch 6, ferner **dadurch gekennzeichnet, dass** die Vorrichtung-zu-Vorrichtung-Verbindung (101, 102, 103, 104) eine WiFi-Direktverbindung ist, und wobei die Out-of-Band-Sender/Empfänger (12, 22) Bluetooth-Sender/Empfänger sind.

8. System nach einem der vorhergehenden Ansprüche, ferner mit einem Back-End-Server (7), der kommunikativ mit dem Netzwerk (100) verbunden ist und ferner **dadurch gekennzeichnet ist, dass** der Back-End-Server (7) ausgelegt ist, Konfigurationsdaten zu dem Konnektivitäts-Provider (1) zu senden und zu dem Konnektivitäts-Client (2, 3, 4, 6), um die Vorrichtung-zu-Vorrichtung-Verbindung einzurichten oder eine VPN-Verbindung auf der Vorrichtung-zu-Vorrichtung-Verbindung (101, 102, 103, 104).

9. Konnektivitäts-Provider (1) zum Teilen einer Netzwerkverbindung mit einem ersten Konnektivitäts-Client (2), wobei der Konnektivitäts-Provider (1) einen Router (11) für den Zugang zu einem Netzwerk (100) und um eine Verbindung des ersten Konnektivitäts-Client (2) mit dem Netzwerk (100) über eine Vorrichtung-zu-Vorrichtung-Verbindung (101) zwischen dem ersten Konnektivitäts-Client (2) und dem Konnektivitäts-Provider (1) und über den Router (11) aufweist, **dadurch gekennzeichnet, dass** der Konnektivitäts-Provider (1) ausgelegt ist, eine Verbindungsanforderung an einen ersten Zugangspunkt (21) in dem Konnektivitäts-Client (2) zu senden, um damit die Vorrichtung-zu-Vorrichtung-Verbindung (101) aufzubauen.

10. Konnektivitäts-Provider nach Anspruch 9, wobei der Konnektivitäts-Provider (1) ferner einen ersten Out-of-Band-Sender/Empfänger (12) aufweist, der kommunikativ mit einem zweiten Out-of-Band-Sender/Empfänger (22) in dem Konnektivitäts-Client (22, 3, 4, 6) verbunden ist, ferner **dadurch gekennzeichnet, dass** der Konnektivitäts-Provider (1) ausgelegt ist, um Berechtigungsdaten zum Einrichten der Vorrichtung-zu-Vorrichtung-Verbindung (101, 102, 103, 104) auszutauschen, indem der Out-of-Band-Sender/Empfänger (12) benutzt wird.

11. Konnektivitäts-Client (2) für den Zugang zu einer Netzwerkverbindung, die von einem Konnektivitäts-Provider (1) geteilt wird, wobei der Konnektivitäts-Client (2) ausgelegt ist, um sich mit einem Netzwerk (100) über eine erste Vorrichtung-zu-Vorrichtung-Verbindung (101) zwischen dem ersten Konnektivitäts-Client (2) und dem Konnektivitäts-Provider (1) und über einen Router (11) in den Konnektivitäts-Provider (1) zu verbinden, **dadurch gekennzeichnet, dass** der erste Konnektivitäts-Client (2) einen ersten Zugangspunkt (21) aufweist, um es dem Konnektivitäts-Provider (1) zu ermöglichen, eine Verbindung zu dem ersten Zugangspunkt (21) herzustellen, um damit die erste Vorrichtung-zu-Vorrichtung-Verbindung (101) aufzubauen.

12. Verfahren in einem Konnektivitäts-Provider (1) zum Teilen einer Netzwerkverbindung zwischen dem Konnektivitäts-Provider (1) und einem ersten Konnektivitäts-Client (2), wobei der Konnektivitäts-Provider (1) einen Router (11) für den Zugang zu einem Netzwerk (100) aufweist, und wobei der erste Konnektivitäts-Client (2) ausgebildet ist, um sich mit dem Netzwerk (100) über eine erste Vorrichtung-zu-Vorrichtung-Verbindung (101) zwischen dem ersten Konnektivitäts-Client (2) und dem Konnektivitäts-Provider (1) und über den Router (11) in den Konnektivitäts-Provider (1) zu verbinden, **dadurch gekennzeichnet, dass** das Verfahren aufweist:
Senden einer Verbindungsanforderung (1001, 1002, 1003, 1005) von dem Konnektivitäts-Provider (1) zu einem ersten Zugangspunkt (21) in dem Konnektivitäts-Client (2), um damit die erste Vorrichtung-zu-Vorrichtung-Verbindung (101) aufzubauen.

13. Verfahren nach Anspruch 12, wobei das Herstellen der Verbindung aufweist:
Suchen (1001, 1002) des ersten Zugangspunkts (21) durch den Konnektivitäts-Provider (1);
Senden (1003) einer Anforderung von dem Konnektivitäts-Provider (1) an den Konnektivitäts-Client (2), um eine Verbindung zu dem Zugangspunkt (21) aufzubauen;
Aufbauen (1005) der Vorrichtung-zu-Vorrichtung-Verbindung (101) über den Zugangspunkt (21).

14. Verfahren in einem Konnektivitäts-Client (2) für den Zugang zu einer Netzwerkverbindung, die von einem Konnektivitäts-Provider (1) geteilt wird, wobei der Konnektivitäts-Client (2) ausgelegt ist, um sich mit einem Netzwerk (100) über eine erste Vorrichtung-zu-Vorrichtung-Verbindung (101) zwischen dem ersten Konnektivitäts-Client (2) und dem Konnektivitäts-Provider (1) und über einen Router (11) in den Konnektivitäts-Provider (1) zu verbinden, **dadurch gekennzeichnet, dass** das Verfahren aufweist:
Aktivieren (2003) eines Zugangspunkts (21) in dem Konnektivitäts-Client (2), um es dem Konnektivitäts-Provider (1) zu ermöglichen, eine Verbindungsanforderung an den ersten Zugangspunkt (21) zu senden, um damit die erste Vorrichtung-zu-Vorrichtung-Verbindung (101) aufzubauen.

15. Computerprogrammelement, das, wenn es von einem Prozessor ausgeführt wird, ausgelegt ist, um ein Verfahren zur Benutzung in einem Konnektivitäts-Provider (1) nach Anspruch 12 oder Anspruch 13 auszuführen.

16. Computerprogrammelement, das, wenn es von einem Prozessor ausgeführt wird, ausgelegt ist, um ein Verfahren zur Benutzung in einem Konnektivitäts-Client (2) entsprechend Anspruch 14 auszuführen.

## Revendications

1. Système de partage d'une connexion réseau entre un fournisseur de connectivité (1) et un premier client de connectivité (2), dans lequel le fournisseur de connectivité (1) comprend un routeur (11) permettant d'accéder à un réseau (100) et dans lequel le premier client de connectivité (2) est configuré pour se connecter au réseau (100) via une première connexion de dispositif à dispositif (101) entre le premier client de connectivité (2) et le fournisseur de connectivité (1) et via le routeur (11) dans le fournisseur de connectivité (1), **caractérisé en ce que** le premier client de connectivité (2) comprend un premier point d'accès (21) et le fournisseur de connectivité (1) est configuré pour envoyer une demande de connexion au premier point d'accès (21) pour ainsi établir la première connexion de dispositif à dispositif (101).

2. Système selon la revendication 1, comprenant en outre un deuxième client de connectivité (3) et dans lequel le deuxième client de connectivité (3) est configuré pour se connecter au réseau (100) via une deuxième connexion de dispositif à dispositif (102) entre le deuxième client de connectivité (3) et le fournisseur de connectivité (1) et via le routeur (11) dans le fournisseur de connectivité (1), **caractérisé en outre en ce que** le deuxième client de connectivité (3) comprend un deuxième point d'accès (31) et le fournisseur de connectivité (1) est configuré pour réaliser une connexion avec le deuxième point d'accès (31) pour ainsi établir la deuxième connexion de dispositif à dispositif (102).

3. Système selon l'une quelconque des revendications précédentes, comprenant en outre un troisième client de connectivité (4) et dans lequel le troisième client de connectivité (4) est configuré pour se connecter au réseau (100) via une troisième connexion de dispositif à dispositif (103) entre le deuxième client de connectivité (3) et le troisième client de connectivité (4), via la première connexion de dispositif à dispositif (101) et via le routeur (11) dans le fournisseur de connectivité (1), **caractérisé en outre en ce que** le troisième client de connectivité (4) est configuré pour réaliser une connexion avec le premier point d'accès (21) pour ainsi établir la troisième connexion de dispositif à dispositif (103).

4. Système selon l'une quelconque des revendications précédentes, comprenant en outre un quatrième client de connectivité (6) et dans lequel le quatrième client de connectivité (6) est configuré pour se connecter au réseau (100) via une quatrième connexion de dispositif à dispositif (104) et via le routeur (11) dans le fournisseur de connectivité (1), **caractérisé en outre en ce que** le fournisseur de connectivité (1) et le premier client de connectivité (2) sont configurés pour former un fournisseur de connectivité virtuel (5) lorsque la première connexion de dispositif à dispositif (101) est établie, le quatrième client de connectivité (6) comprend un troisième point d'accès (61) et le fournisseur de connectivité virtuel (5) est configuré pour réaliser une connexion avec le troisième point d'accès (61) pour ainsi établir la quatrième connexion de dispositif à dispositif (104).

5. Système selon l'une quelconque des revendications précédentes, dans lequel le fournisseur de connectivité (1) comprend en outre un premier émetteur-récepteur hors bande (12) et le client de connectivité (2, 3, 4, 6) comprend un second émetteur-récepteur hors bande (22), **caractérisé en outre en ce que** le fournisseur de connectivité (1) et le client de connectivité (2, 3, 4, 6) sont configurés pour échanger des données d'accréditations pour instaurer la connexion de dispositif à dispositif (101, 102, 103, 104) à l'aide des émetteurs-récepteurs hors bande (12, 22).

6. Système selon la revendication 5, **caractérisé en outre en ce que** le fournisseur de connectivité (1) et le client de connectivité (2, 3, 4, 6) sont configurés pour échanger les données d'accréditations pendant l'établissement d'une liaison.

7. Système selon la revendication 6, **caractérisé en outre en ce que** la connexion de dispositif à dispositif (101, 102, 103, 104) est une connexion directe WiFi et dans lequel les émetteurs-récepteurs hors bande (12, 22) sont des émetteurs-récepteurs Bluetooth.

8. Système selon l'une quelconque des revendications précédentes, comprenant en outre un serveur dorsal (7) qui est connecté en communication au réseau (100) et **caractérisé en outre en ce que** le serveur dorsal (7) est configuré pour transmettre des données de configuration au fournisseur de connectivité (1) et au client de connectivité (2, 3, 4, 6) pour instaurer la connexion de dispositif à dispositif ou une connexion VPN en haut de la connexion de dispositif à dispositif (101, 102, 103, 104).

9. Fournisseur de connectivité (1) de partage d'une connexion réseau avec un premier client de connectivité (2), dans lequel le fournisseur de connectivité (1) comprend un routeur (11) permettant d'accéder à un réseau (100) et permettant au premier client de connectivité (2) de se connecter au réseau (100) via une connexion de dispositif à dispositif (101) entre le premier client de connectivité (2) et le fournisseur de connectivité (1) et via le routeur (11), **caractérisé en ce que** le fournisseur de connectivité (1) est configuré pour envoyer une demande de connexion à un premier point d'accès (21) dans le client de connectivité (2) pour ainsi établir la connexion de dispositif à dispositif (101).

10. Fournisseur de connectivité selon la revendication 9, dans lequel le fournisseur de connectivité (1) comprend en outre un premier émetteur-récepteur hors bande (12) qui peut être connecté en communication à un second émetteur-récepteur hors bande (22) dans le client de connectivité (22, 3, 4, 6), **caractérisé en outre en ce que** le fournisseur de connectivité (1) est configuré pour échanger des données d'accréditations pour instaurer la connexion de dispositif à dispositif (101, 102, 103, 104) à l'aide de l'émetteur-récepteur hors bande (12).

11. Client de connectivité (2) permettant d'accéder à une connexion réseau qui est partagée par un fournisseur de connectivité (1), dans lequel le client de connectivité (2) est configuré pour se connecter à un réseau (100) via une première connexion de dispositif à dispositif (101) entre le premier client de connectivité (2) et le fournisseur de connectivité (1) et via un routeur (11) dans le fournisseur de connectivité (1), **caractérisé en ce que** le premier client de connectivité (2) comprend un premier point d'accès (21) pour permettre au fournisseur de connectivité (1) de réaliser une connexion avec le premier point d'accès (21) pour ainsi établir la première connexion de dispositif à dispositif (101).

12. Procédé dans un fournisseur de connectivité (1) de partage d'une connexion réseau entre le fournisseur de connectivité (1) et un premier client de connectivité (2), dans lequel le fournisseur de connectivité (1) comprend un routeur (11) permettant d'accéder à un réseau (100) et dans lequel le premier client de connectivité (2) est configuré pour se connecter au réseau (100) via une première connexion de dispositif à dispositif (101) entre le premier client de connectivité (2) et le fournisseur de connectivité (1) et via le routeur (11) dans le fournisseur de connectivité (1), **caractérisé en ce que** le procédé comprend :
l'envoi d'une demande de connexion (1001, 1002, 1003, 1005) du fournisseur de connectivité (1) au premier point d'accès (21) dans le client de connectivité (2) pour ainsi établir la première connexion de dispositif à dispositif (101).

13. Procédé selon la revendication 12, dans lequel la réalisation de la connexion comprend :
la recherche (1001, 1002) du premier point d'accès (21) par le fournisseur de connectivité (1) ;
la transmission (1003) d'une demande du fournisseur de connectivité (1) au client de connectivité (2) pour instaurer une connexion au point d'accès (21) ;
l'instauration (1005) de la connexion de dispositif à dispositif (101) via le point d'accès (21).

14. Procédé dans un client de connectivité (2) permettant d'accéder à une connexion réseau qui est partagée par un fournisseur de connectivité (1), dans lequel le client de connectivité (2) est configuré pour se connecter à un réseau (100) via une première connexion de dispositif à dispositif (101) entre le premier client de connectivité (2) et le fournisseur de connectivité (1) et via un routeur (11) dans le fournisseur de connectivité (1), **caractérisé en ce que** le procédé comprend :
l'activation (2003) d'un point d'accès (21) dans le client de connectivité (2) pour permettre au fournisseur de connectivité (1) d'envoyer une demande de connexion au premier point d'accès (21) pour ainsi établir la première connexion de dispositif à dispositif (101).

15. Elément programme d'ordinateur qui, lorsqu'il est exécuté par un processeur, est adapté pour effectuer un procédé à utiliser dans un fournisseur de connectivité (1) selon la revendication 12 ou la revendication 13.

16. Elément programme d'ordinateur qui, lorsqu'il est exécuté par un processeur, est adapté pour effectuer un procédé à utiliser dans un client de connectivité (2) selon la revendication 14.
